# EUROPÄISCHE PATENTSCHRIFT

(11) **EP 4 188 639 B1**
(45) Veröffentlichungstag und Bekanntmachung des Hinweises auf die Patenterteilung: **25.09.2024**
(21) Anmeldenummer: 21815104.1
(22) Anmeldetag: 29.06.2021
(51) Int. Cl.: B23Q 3/18, F16B 7/18, F16B 35/00, B23Q 17/22

(54) **SYSTEM ZUM AUSRICHTEN EINES WERKSTÜCKS RELATIV ZU EINEM MASCHINENTEIL**
SYSTEM FOR ALIGNING A WORKPIECE RELATIVE TO A MACHINE PART
SYSTÈME POUR ALIGNER UNE PIÈCE PAR RAPPORT À UN ÉLÉMENT DE MACHINE

(30) Priorität: 31.07.2020 CN 202010758979; 09.09.2020 DE 102020005510
(43) Veröffentlichungstag der Anmeldung: 07.06.2023
(73) Patentinhaber: SEW-EURODRIVE GmbH & Co. KG, 76646 Bruchsal (DE)
(72) Erfinder: WU, Zili, 300060 Tianjin (CN)
(86) Internationale Anmeldenummer: PCT/EP2021/025239
(87) Internationale Veröffentlichungsnummer: WO 2022/022851

(56) Entgegenhaltungen:
- DE-C- 549 225
- US-A- 2 442 444
- US-A- 2 780 468
- US-A- 2 833 544
- US-A- 5 082 299
- US-B2- 7 036 810
- US-B2- 9 863 456

## Beschreibung

Die Erfindung betrifft ein System zum Ausrichten eines Werkstücks relativ zu einem Maschinenteil.

Es ist allgemein bekannt, dass beim Aufnehmen eines Werkstücks in einer Bearbeitungsmaschine eine Ausrichtung des Werkstücks in eine Solllage erfolgen muss. Somit ist dabei das Werkstück zu einer Drehachse ausrichtbar, um die es drehbar angeordnet ist.

**Aus der** US 5 048 384 A **ist eine Zentriervorrichtung bekannt.**

### Aus der US 2 809 044 A ist eine Bearbeitungsmaschine bekannt.

**Aus der** JP H04-244314 A **ist eine Befestigungsanordnung bekannt.**

**Aus der** US 2 780 468 A **ist als nächstliegender Stand der Technik eine Spannvorrichtung bekannt.**

**Aus der** US 9 863 456 B2 **ist eine Offset-Kompensation in einem automatischen Verschlusssystem bekannt.**

**Aus der** US 5 082 299 A **ist eine adjustierbare Rotationskupplung bekannt.**

**Aus der** US 2 833 544 A **ist eine kompensierbare Werkzeughalterung bekannt.**

**Aus der** US 2 442 444 A **ist ein Bohrkopf bekannt.**

**Aus der** US 7 036 810 B2 **ist ein Befestigungssystem bekannt.**

**Aus der** DE 549 225 C **ist eine Vorrichtung zum Zentrieren von Werkstücken auf umlaufenden Arbeitsspindeln bekannt.**

Der Erfindung liegt daher die Aufgabe zugrunde, ein System mit einem Werkstück und einem Maschinenteil einer Werkzeugmaschine weiterzubilden, wobei ein Ausrichten einfach ausführbar sein soll.

Erfindungsgemäß wird die Aufgabe bei dem System nach den in Anspruch 1 angegebenen Merkmalen gelöst.

Wichtige Merkmale der Erfindung bei dem System zum Ausrichten eines Werkstücks relativ zu einem Maschinenteil, insbesondere zu einer Bearbeitungsmaschine, sind, dass das System das Werkstück, das Maschinenteil, ein Aufnahmeteil und ein Adapterteil aufweist,
wobei das Adapterteil einen Bolzenbereich aufweist, der in eine Bohrung des Werkstücks, insbesondere eine mittig im Werkstück angeordnete Bohrung zumindest teilweise eingeführt ist,
wobei das Adapterteil zum Aufnahmeteil mittels in radial gerichtete Gewindebohrungen des Aufnahmeteils eingeschraubten Gewindestiften kraftschlüssig gehalten ist, insbesondere und/oder zentriert gehalten ist,
wobei das Maschinenteil, insbesondere ein Dornbereich des Maschinenteils, in eine Ausnehmung des Aufnahmeteils zumindest teilweise eingesteckt ist.

Von Vorteil ist dabei, dass das Adapterteil in das Werkstück einschraubbar ist und somit präzise zum Werkstück ausrichtbar ist. Das Adapterteil ist mittels der Gewindestifte zum Aufnahmeteil ausrichtbar und zentrierbar. Am Aufnahmeteil ist eine Ausnehmung ausgebildet, in welcher der Dornbereich des Maschinenteils aufnehmbar ist.

Durch die zweiteilige Ausführung sind verschiedene Adapterteile einsetzbar, die sich in der Ausführung ihres Bolzenbereichs unterscheiden und somit mit verschiedenen Werkstücken verbindbar sind. Zum Aufnahmeteil hin sind dann diese Adapterteile stets gleichartig ausgeführt, so dass sie alle mit dem Aufnahmeteil verbindbar sind. Außerdem müssen die Werkstücke nur ein mittig angeordnetes Bohrloch, insbesondere Gewindebohrloch, aufweisen, um mit dem Adapterteil adaptierbar zu sein. Das Aufnahmeteil weist eine Ausnehmung auf, die zum aufnehmenden Maschinenteil der Bearbeitungsmaschine passend ausgeführt ist. Die Ausnehmung ist also auf das Maschinenteil anpassbar.

Bei einer vorteilhaften Ausgestaltung ist die Bohrung des Werkstücks als Gewindebohrung ausgeführt und der Bolzenbereich als Schraubgewindebereich,
insbesondere wobei das Adapterteil mit seinem Bolzenbereich in die Gewindebohrung eingeschraubt ist. Von Vorteil ist dabei, dass eine stabile, präzise ausrichtbare Verbindung erreichbar ist.

Bei einer vorteilhaften Ausgestaltung sind die in radial gerichtete Gewindebohrungen des Aufnahmeteils eingeschraubten Gewindestifte in Umfangsrichtung insbesondere regelmäßig voneinander beabstandet. Von Vorteil ist dabei, dass eine Ausrichtung und Zentrierung einfach ermöglicht ist.

Bei einer vorteilhaften Ausgestaltung sind die radial gerichteten Gewindebohrungen des Aufnahmeteils in einem ringförmigen Bereich des Aufnahmeteils angeordnet, der an seiner vom Werkstück abgewandten Seite an einen scheibenförmigen Bereich des Aufnahmeteils angrenzt, wobei dieser Bereich den vom ringförmigen Bereich überdeckten Radialabstandsbereich umfasst,
insbesondere wobei der scheibenförmige Bereich und der ringförmige Bereich einstückig, insbesondere also einteilig, ausgeformt sind. Von Vorteil ist dabei, dass die Ausrichtung des Adapterteils und somit des Werkstücks in einfacher Weise ermöglicht ist.

Bei einer vorteilhaften Ausgestaltung ist das Adapterteil in einer Vertiefung des Aufnahmeteils angeordnet, insbesondere aufgenommen,
insbesondere wobei das Adapterteil mittels der Gewindestifte vom Aufnahmeteil beabstandet ist. Von Vorteil ist dabei, dass das Adapterteil zumindest formschlüssig begrenzt angeordnet ist.

Bei einer vorteilhaften Ausgestaltung ist das Adapterteil aus dem Bolzenbereich des Adapterteils und einem an diesen Bolzenbereich angrenzenden, scheibenförmiger Bereich des Adapterteils einteilig gebildet, insbesondere also einstückig ausgebildet. Von Vorteil ist dabei, dass ein stabiler Aufbau erreichbar ist und somit eine hohe Belastung zulässig ist.

Bei einer vorteilhaften Ausgestaltung ist am Außenumfang des Adapterteils, insbesondere an einem oder dem scheibenförmigen Bereich des Adapterteils, eine zylindrische Fläche, an welcher die Gewindestifte abgestützt sind. Von Vorteil ist dabei, dass bei entsprechend feiner und präziser Bearbeitung der Fläche eine präzise Ausrichtung des Werkstücks ausführbar ist.

**Erfindungsgemäß** sind im Adapterteil durch das Adapterteil, insbesondere durch einen oder den scheibenförmigen Bereich des Adapterteils, axial durchgehende Gewindebohrungen angeordnet, in welche Gewindestifte eingeschraubt sind, die am Werkstück, insbesondere an einer dem Adapterteil zugewandten ebenen Stirnfläche des Werkstücks, abgestützt sind. Von Vorteil ist dabei, dass die Gewindebohrungen in einem stabilen Bereich anordenbar sind.

Bei einer vorteilhaften Ausgestaltung sind, insbesondere auf gleichem Radialabstand zu den durch das Adapterteil axial durchgehenden Gewindebohrungen, zwei in Umfangsrichtung voneinander beabstandete, insbesondere voneinander maximal beabstandete, Bohrungen am Adapterteil angeordnet, in welche an einem Hebelteil befestigte oder ausgeformte Bolzen in die Bohrungen einführbar sind, so dass mittels des Hebelteils das Adapterteil, insbesondere mit hohem Drehmoment in das Werkstück einschraubbar ist. Von Vorteil ist dabei, dass eine einfache Bedienung auch nach erfolgter Montage ausführbar ist.

Bei einer vorteilhaften Ausgestaltung weist das Hebelteil einen aufgerauten und/oder geriffelten Bereich auf, welcher von den Bolzen des Hebelteils beabstandet ist. Von Vorteil ist dabei, dass eine verbesserte Griffigkeit zu einem sicheren Aufbringen eines hohen Drehmoments führt.

Bei einer vorteilhaften Ausgestaltung sind am Aufnahmeteil axial durchgehende Bohrungen ausgebildet, durch welche insbesondere mit einem Werkzeug, die in die axial gerichteten Gewindebohrungen des Adapterteils eingeschraubten Gewindestifte betätigbar, insbesondere schraubbar sind,
insbesondere wobei die am Aufnahmeteil axial durchgehenden Bohrungen auf demselben Radialabstand angeordnet sind wie die in die axial gerichteten Gewindebohrungen des Adapterteils eingeschraubten Gewindestifte. Von Vorteil ist dabei, dass ein Justieren oder Nachjustieren auch nach Aufnahme des Adapterteils in dem Aufnahmeteil ermöglicht ist und eine einfache Bedienbarkeit erreicht ist.

Bei einer vorteilhaften Ausgestaltung weist das Hebelteil an seiner dem Adapterteil zugewandten Seite die beiden voneinander mit einem ersten Abstand beabstandeten, zum Adapterteil hin hervorstehenden Bolzen auf, die in jeweilige axial gerichtete Bohrlöcher, insbesondere durch das Adapterteil durchgehende Bohrlöcher, hineinragen. Von Vorteil ist dabei, dass ein hohes Drehmoment aufbringbar ist.

Bei einer vorteilhaften Ausgestaltung weist das Hebelteil an seiner vom Adapterteil abgewandten Seite zwei weitere, voneinander mit einem zweiten Abstand beabstandete, axial hervorstehenden Bolzen auf,
wobei der erste Abstand größer ist als der zweite Abstand. Von Vorteil ist dabei, dass verschieden große Adapterteile betätigbar sind. Somit ist das Hebelteil für verschiedene Baugrößen verwendbar.

Bei einer vorteilhaften Ausgestaltung ist die axiale Richtung identisch mit einer Symmetrieachse des Aufnahmeteils und/oder mit einer Symmetrieachse des Adapterteils,
insbesondere wobei die radiale Richtung und die Umfangsrichtung auf diese Symmetrieachse bezogen ist. Von Vorteil ist dabei, dass das Werkstück um eine Drehachse drehbar ist und auf einen Dornbereich des Maschinenteils aufnehmbar ist, wobei die Drehachse durch die Spitze des Dornbereichs führt.

**Der von einer Komponente beanspruchte, also überdeckte Bereich von auf die Symmetrieachse bezogenen Radialabständen wird auch als Radialabstandsbereich bezeichnet. Die Umfangsrichtung ist ebenfalls auf die Symmetrieachse bezogen. Durch Angabe des in Umfangsrichtung von der Komponente überdeckten Bereichs, also Umfangswinkelbereichs, und durch Angabe des in axialer Richtung überdeckten Bereichs sowie des genannten, von der Komponente überdeckten Radialabstandsbereiches ist ein Raumbereich definiert, der die Komponente zumindest umfasst oder enthält.**

Bei einer vorteilhaften Ausgestaltung weist das Aufnahmeteil und/oder das Adapterteil eine zumindest diskrete Drehsymmetrie, insbesondere bei seiner Herstellung vor Einbringung von Bohrungen eine kontinuierliche Drehsymmetrie, auf. Von Vorteil ist dabei, dass die Kräfte am Umfang möglichst gleichmäßig verteilt sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

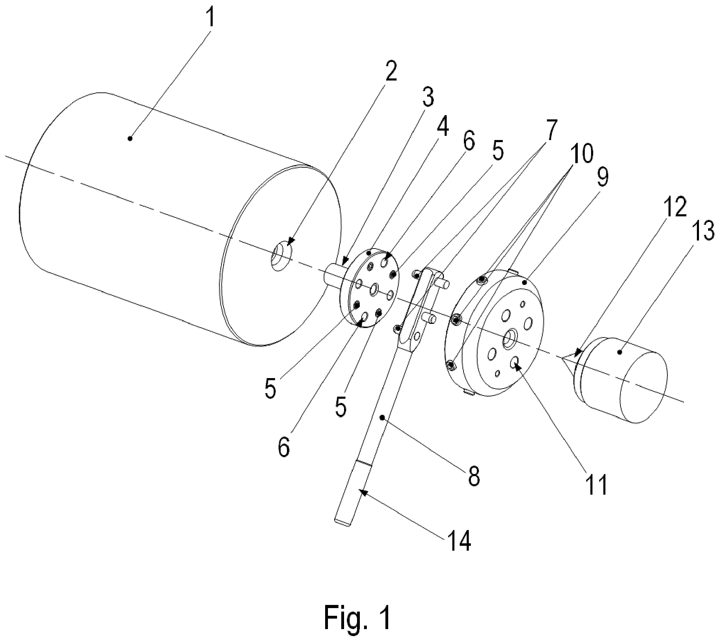

In der Figur 1 ist ein Ausrichtsystem zur Ausrichtung eines Werkstücks 1 in einer Maschine explodiert und schematisch in Schrägansicht dargestellt.
In der Figur 2 ist das aufgenommene Werkstück 1 mit Aufnahmeteil 9 und dem aufnehmenden Maschinenteil 13 in Schrägansicht dargestellt.
In der Figur 3 ist eine zugehörige Seitenansicht dargestellt.
In der Figur 4 ist eine zugehörige Schnittansicht dargestellt, die in der in Figur 3 entsprechend gekennzeichneten Schnittebene A-A ausgeführt ist.

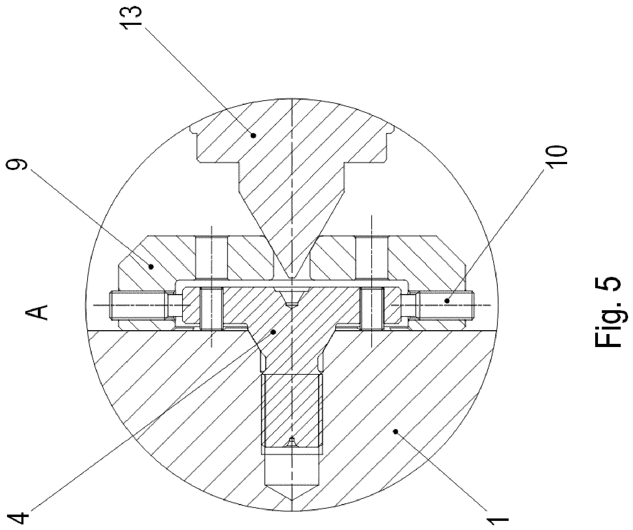

In der Figur 5 ist ein vergrößerter Ausschnitt der Figur 4 dargestellt.

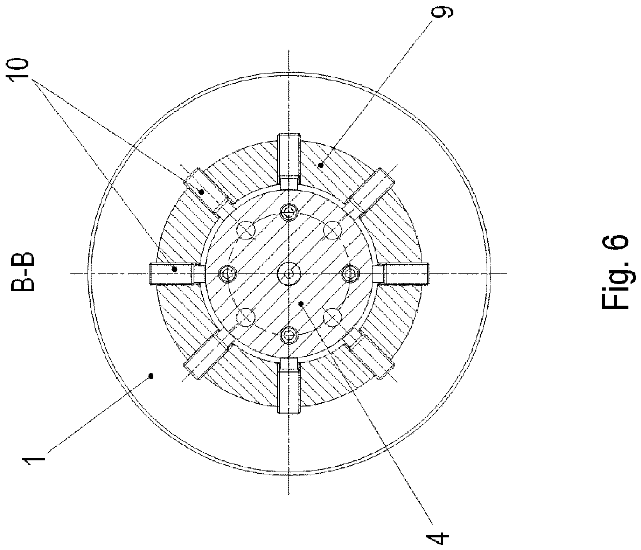

In der Figur 6 ist eine weitere zugehörige Schnittansicht dargestellt, die in der in Figur 3 entsprechend gekennzeichneten Schnittebene B-B ausgeführt ist.
In der Figur 7 ist das Aufnahmeteil 9 in Schrägansicht dargestellt.

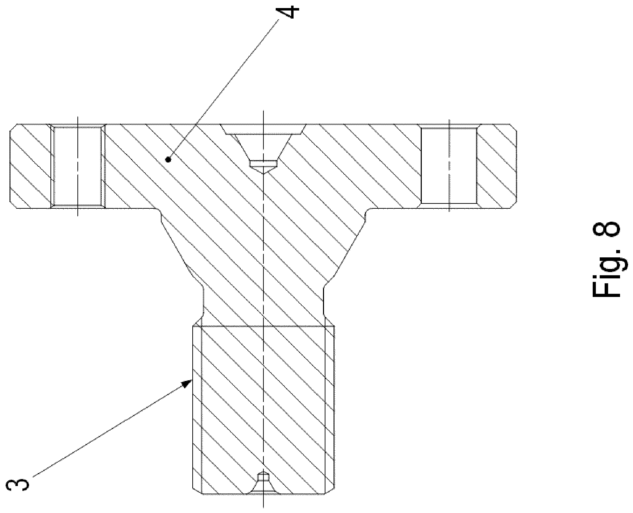

In der Figur 8 ist das Adapterteil 4 in Schrägansicht dargestellt.

Wie in den Figuren dargestellt, ist mit dem erfindungsgemäßen System ein Werkstück 1, insbesondere eine Welle, beispielsweise abtreibende Welle eines Industriegetriebes, in einer Bearbeitungsmaschine, insbesondere Werkzeugmaschine, auf einen Dornbereich 12 eines Maschinenteils 13 aufnehmbar.

Dabei ist eine relative Zentrierung des Werkstücks 1 zum Maschinenteil 13 hochpräzise ausführbar.

Wichtig ist dabei, dass das Werkstück 1 eine mittig und/oder zentrisch eingebrachte Bohrung aufweist, in welche ein Bolzenbereich 3 eines Adapterteils 4 einführbar ist. Vorzugsweise ist die Bohrung des Werkstücks 1 als Gewindebohrung ausgeführt und der Bolzenbereich 3 als Schraubgewindebereich, so dass das Adapterteil 4 einschraubbar ist in die Bohrung des Werkstücks 1.

Zur Betätigung, also zum Einschrauben, des Adapterteils 4 wird ein Werkzeug angewendet, das ein Hebelteil 8 aufweist, welches an seiner dem Adapterteil 4 zugewandten Seite zwei voneinander beabstandete, zum Adapterteil 4 hin hervorstehende Bolzen 7 aufweist, die in jeweilige axial gerichtete Bohrlöcher 6, insbesondere durch das Adapterteil 4 durchgehende Bohrlöcher 6, hineinragen.

Die axiale Richtung ist parallel zur Drehachse des Werkstücks 1, insbesondere der Welle.

Das Adapterteil 4 weist weitere durch das Adapterteil 4 durchgehende Bohrlöcher auf, wobei die Bohrlöcher als Gewindebohrungen ausgeführt sind. In diese Gewindebohrungen sind axial gerichtet Gewindestifte 5 eingeschraubt, so dass die axiale Beabstandung des Adapterteils 4 vom Werkstück 1 mittels der Einschraubtiefe und somit dem entsprechenden Hervorstehen der Gewindestifte 5 in axialer Richtung festlegbar ist. Da in Umfangsrichtung mehrere, insbesondere vier, voneinander beabstandete Gewindestifte 5 am Adapterteil 4 angeordnet sind, ist nicht nur die axiale Beabstandung des Adapterteils 4 vom Werkstück 1 sondern auch eine Ausrichtung des Adapterteils 4 zum Werkstück 1 ermöglicht, soweit ein Spiel der Schraubverbindung des Adapterteils 4 zum Werkstück 1 zur Verfügung steht. Insbesondere Im Mikrometerbereich ist allerdings auch elastische Verformbarkeit vorhanden und ermöglicht somit einen wenn auch geringen Freiheitsgrad.

Das Hebelteil 8 weist einen geriffelt ausgeführten und/oder aufgerauten Griffbereich 14 auf, der von den Bolzen 7 beabstandet ist, insbesondere in radialer Richtung, also in Richtung der längsten Ausdehnung des Hebelteils 8. Somit ist die Griffigkeit bei der Bedienung des Hebelteils 8 erhöht und/oder ein Abrutschen der Hände des Bedieners verhindert.

Das Adapterteil 4 weist an seinem Außenumfang eine zylindrische Fläche auf, wobei die zu dieser zylindrischen Fläche zugehörige Zylinderachse zur Drehachse des Werkstücks 1 identisch ist.

An dieser zylindrischen Fläche wird das Aufnahmeteil 9 ausgerichtet.

Das Aufnahmeteil 9 weist eine Vertiefung auf, in welcher das Adapterteil 4 aufgenommen wird, wobei radial gerichtete, in Umfangsrichtung voneinander beabstandete, insbesondere in Umfangsrichtung regelmäßig voneinander beabstandete, Gewindestifte 10 sind in radial durch das Aufnahmeteil 9 durchgehende Gewindebohrungen des Aufnahmeteils eingeschraubt. Dabei ragen diese Gewindestifte 10 sowohl nach radial innen zum Adapterteil 4 als auch nach radial außen aus dem Aufnahmeteil 9 hervor. Somit ist eine einfache Bedienung der Gewindestifte 10 ermöglicht. Denn die für diese Gewindestifte 10 vorgesehenen Gewindebohrungen des Aufnahmeteils 9 sind durch einen ringförmigen Bereich des Aufnahmeteils 9 durchgehend ausgeführt.

Unter Vernachlässigung der Bohrungen weist das Aufnahmeteil 9 eine kontinuierliche Drehsymmetrie auf, wobei die Drehsymmetrieachse identisch ist zur Ringachse des ringförmigen Bereichs. Die Gewindestifte 10 sind derart in das Aufnahmeteil 9 eingebracht, dass die Gewindestifte 10 zusammen mit dem Aufnahmeteil 9 eine achtzählige Drehsymmetrie aufweisen.

Der von dem ringförmigen Bereich überdeckte Radialabstandsbereich ist aber kleiner als der von den Gewindestiften 10 überdeckte Radialabstandsbereich. Somit ist ein radial beidseitiges Hervorragen der Gewindestifte 10 bewirkt. Von radial außen kommend ist daher ein Betätigen der Gewindestifte 10 einfach ausführbar und die nach radial innen aus dem Aufnahmeteil 9 herausragenden Gewindestifte 10 ermöglichen eine Beabstandung zwischen Aufnahmeteil 9 und Adapterteil 4.

Auf diese Weise ist ein Ausrichten des Adapterteils 4 zum Aufnahmeteil 9 hin ermöglicht, so dass die Drehachse des Werkstücks 1 koaxial ausgerichtet wird, insbesondere also in Deckung kommt zur Drehsymmetrieachse des Aufnahmeteils 9.

Im Aufnahmeteil 9 sind axial durchgehende Bohrlöcher 11 eingebracht, durch welche hindurch die axial gerichteten, in das Adapterteil 4 eingeschraubten Gewindestifte 5 betätigbar sind. Auf diese Weise ist der Abstand zwischen dem Werkstück 1 und dem Adapterteil 4 einstellbar.

Auf gleichem Radialabstand sind weitere axial durch das Aufnahmeteil 9 durchgehende Löcher im Aufnahmeteil 9 eingebracht, durch welche hindurch mittels weiterer axial gerichteter Gewindestifte, die in Gewindebohrungen des Adapterteils 4 eingeschraubt sind, der Abstand zwischen dem Adapterteil 4 und dem Aufnahmeteil 9 einstellbar ist. Dabei drücken diese weiteren Gewindestifte mit ihrer axialen Stirnfläche auf eine am Aufnahmeteil 9 eingebrachte vorzugsweise ebene Fläche, die von dem ringförmigen Bereich radial umgeben ist.

Die Gewindestifte 5 hingegen drücken mit ihrer dem Werkstück 1 zugewandten Stirnfläche auf eine ebenfalls vorzugsweise ebene Fläche, die am Werkstück 1 ausgebildet ist.

Bei der Herstellung wird das Adapterteil 4 in einem ersten Verfahrensschritt mittels eines Werkzeugs in die mittige Bohrung 2 des Werkstücks 1 eingeschraubt.

Hierzu wird ein Hebelteil 8 verwendet, an dessen dem Adapterteil 4 zugewandter Seite zumindest zwei Bolzen 7 angeordnet sind, die in die Bohrungen 6 des Adapterteils 4 einführbar sind, insbesondere wobei die beiden Bohrungen 6 einander diametral am Adapterteil 4 gegenüberstehen, insbesondere also einen Winkelabstand in Umfangsrichtung von 180° zueinander aufweisen. Auf diese Weise ist ein möglichst großes Drehmoment zum Einschrauben des Adapterteils 4 in die Gewindebohrung des Werkstücks 1 ermöglicht.

Ein von den Bolzen 7 beabstandeter Griffbereich 14 ist am Hebelteil 8 aufgeraut oder geriffelt ausgebildet, so dass ein Abrutschen der Hände des Bedienpersonals verhinderbar ist.

Je weiter der Griffbereich 14 von den Bolzen 7 entfernt angeordnet ist, desto höher ist das vom Bediener des Hebelteils 8 eintragbare Drehmoment.

Auf der vom Werkstück 1 abgewandten Seite weist das Hebelteil 8 ebenfalls zwei Bolzen auf, die aber einen anderen Abstand zueinander aufweisen. Somit ist mit dieser Seite des Hebelteils 8 ein anderes Adapterteil 4 betätigbar, welches ein beispielsweise kleineres Werkstück 1 mit dem anderen Adapterteil 4 verbindbar macht.

Mittig im Aufnahmeteil ist auf der von der Vertiefung abgewandten Seite des Aufnahmeteils 9 eine Ausnehmung ausgebildet, in welche der Dornbereich 12 des Maschinenteils 13 zumindest teilweise einführbar ist zum Aufnehmen des Aufnahmeteils 9 und somit auch des über das im Aufnahmeteils 9 aufgenommene Adapterteil 4 verbundene Werkstück 1 auf dem Dornbereich 12. Die Ausnehmung ist vorzugsweise als zylindrisches Bohrloch ausgeführt und der Dornbereich 12 konisch geformt, so dass eine Linienberührung bewirkt ist.

Auf der Bearbeitungsmaschine ist vorzugsweise eine Schleifmaschine. Das Werkstück 1 ist als Welle ausgeführt und wird beim Bearbeiten, also nach dem Aufnehmen des Werkstückes 1 auf der Maschine rundgeschliffen.

Das Hebelteil 8 ist nur als Werkzeug zum Einschrauben des Adapterteil 4 in die Gewindebohrung des Werkstücks 1 vorgesehen und ist danach entfernbar.

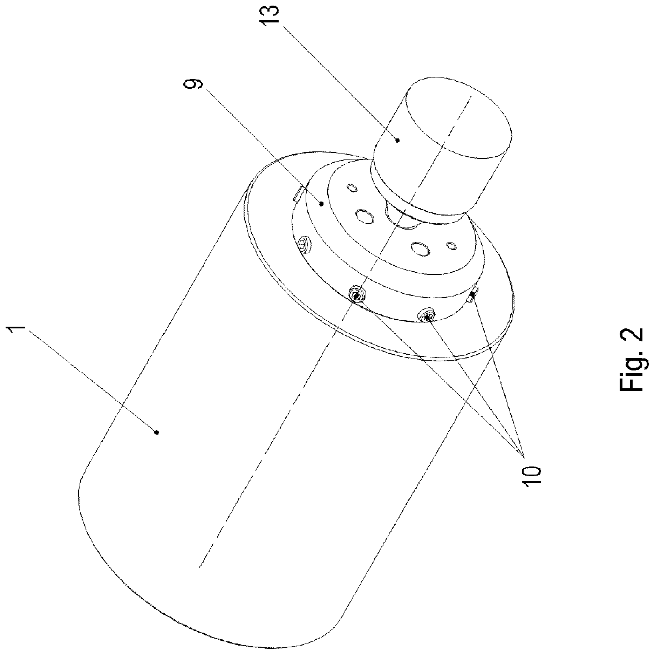

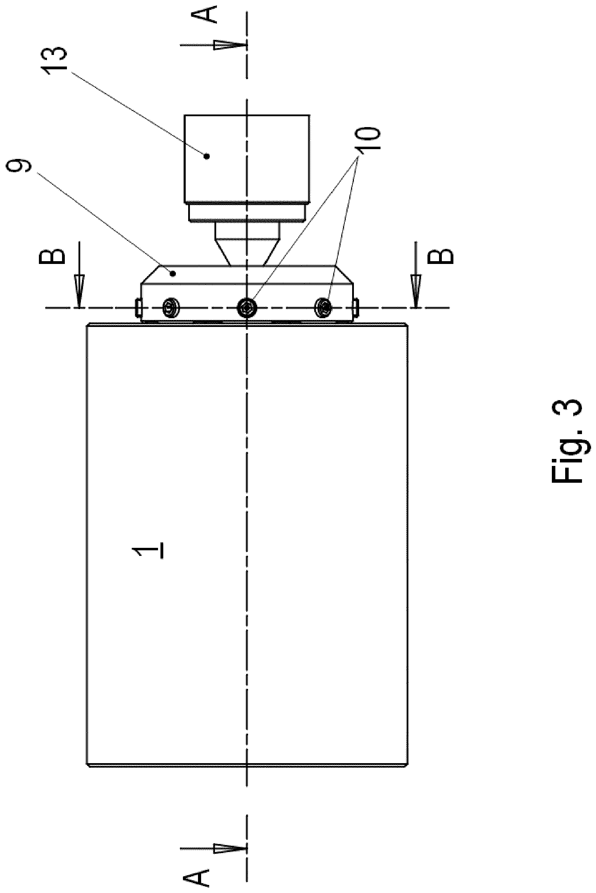

Wie in Figur 2 und Figur 3 gezeigt, ist nach Zusammenbau immer noch ein Betätigen der Gewindestifte 10 ermöglicht und somit ein Zentrieren und Ausrichten des Adapterteils 4 relativ zum Aufnahmeteil 9.

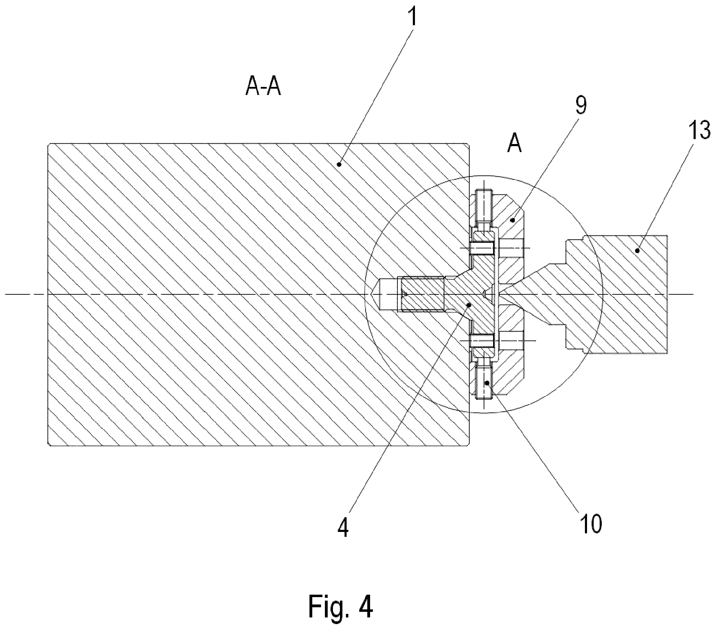

Wie in Figur 4 dargestellt, ragt der Dornbereich 12 zumindest teilweise in die zylindrische Ausnehmung hinein, so dass eine Linienberührung des konischen Dornbereichs 12 mit dem Rand der Ausnehmung eintritt.

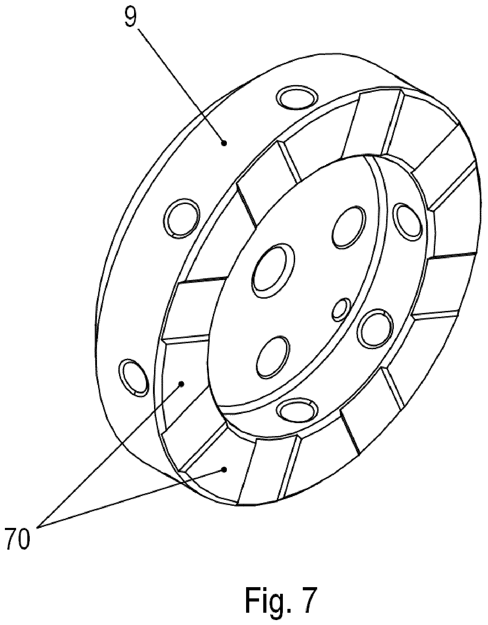

Wie in Figur 7 gezeigt, sind an der dem Werkstück 1 zugewandten Seite des Aufnahmeteils 9 axial hervorragende Stegbereiche 70 ausgebildet, welche fein bearbeitet sind und auf der fein bearbeiteten Stirnfläche des Werkstücks 1 anliegen. Somit ist das Aufnahmeteil 9 zum Werkstück 1 ausgerichtet.

Die Stegbereiche 70 erstrecken sich jeweils in Umfangsrichtung mehr als in radialer Richtung. Vorzugswiese sind sie als Kreisringsegmente ausgebildet. Insbesondere ist die Ausdehnung der Stegbereiche 70 in radialer Richtung kleiner als in Umfangsrichtung. Die Ausdehnung der Stegbereiche 70 in axialer Richtung ist kleiner als die Ausdehnung in Umfangsrichtung und in radialer Richtung. Die Stegbereiche 70 sind in Umfangsrichtung voneinander beabstandet, insbesondere regelmäßig beabstandet.

Bei weiteren erfindungsgemäßen Ausführungsbeispielen ist das Werkstück 1 als Verzahnungsteil für ein Getriebe ausgeführt, wobei nach Aufnehmen des Werkstücks 1 auf den Dorn eine Schleifbearbeitung der Verzahnung ausgeführt wird.

### Bezugszeichenliste

1 Werkstück
2 Bohrung, insbesondere Gewindebohrung
3 Bolzenbereich, insbesondere Schraubgewindebereich
4 Adapterteil
5 axial gerichtete Gewindestifte
6 Bohrloch, insbesondere durchgehendes Bohrloch
7 Bolzen
8 Hebelteil
9 Aufnahmeteil
10 radial gerichtete Gewindestifte
11 Bohrloch
12 Dornbereich
13 Maschinenteil
14 Griffbereich
70 Stegbereich

## Patentansprüche

1. System zum Ausrichten eines Werkstücks (1) relativ zu einem Maschinenteil (13), insbesondere zu einer Bearbeitungsmaschine,
wobei das System das Werkstück (1), das Maschinenteil (13), ein Aufnahmeteil (9) und ein Adapterteil (4) aufweist,
wobei das Adapterteil (4) zum Aufnahmeteil (9) mittels in radial gerichtete Gewindebohrungen des Aufnahmeteils (9) eingeschraubten, ersten Gewindestiften (10) kraftschlüssig gehalten ist, insbesondere und/oder zentriert gehalten ist,
wobei das Maschinenteil (13), insbesondere ein Dornbereich (12) des Maschinenteils (13), in eine Ausnehmung des Aufnahmeteils (9) zumindest teilweise eingesteckt ist,
**dadurch gekennzeichnet, dass**
**das Adapterteil (4) einen Bolzenbereich (3) aufweist, der in eine Bohrung (2) des Werkstücks (1), insbesondere eine mittig im Werkstück (1) angeordnete Bohrung (2) zumindest teilweise eingeführt ist,**
**wobei im Adapterteil (4) durch das Adapterteil (4), insbesondere durch einen oder den scheibenförmigen Bereich des Adapterteils (4), axial durchgehende Gewindebohrungen angeordnet sind, in welche** zweite **Gewindestifte** (5) **eingeschraubt sind,**
**die am Werkstück (1), insbesondere an einer dem Adapterteil (4) zugewandten ebenen Stirnfläche des Werkstücks (1), abgestützt sind.**

2. System nach Anspruch 1,
**dadurch gekennzeichnet, dass**
die Bohrung (2) des Werkstücks (1) als Gewindebohrung ausgeführt ist und der Bolzenbereich (3) als Schraubgewindebereich,
insbesondere wobei das Adapterteil (4) mit seinem Bolzenbereich (3) in die Gewindebohrung eingeschraubt ist.

3. System nach einem der vorangegangenen Ansprüche,
**dadurch gekennzeichnet, dass**
die in radial gerichtete Gewindebohrungen des Aufnahmeteils (9) eingeschraubten, ersten Gewindestifte (10) in Umfangsrichtung insbesondere regelmäßig voneinander beabstandet sind.

4. System nach einem der vorangegangenen Ansprüche,
**dadurch gekennzeichnet, dass**
die radial gerichteten Gewindebohrungen des Aufnahmeteils (9) in einem ringförmigen Bereich des Aufnahmeteils (9) angeordnet sind, der an seiner vom Werkstück (1) abgewandten Seite an einen scheibenförmigen Bereich des Aufnahmeteils (9) angrenzt,
wobei dieser Bereich den vom ringförmigen Bereich überdeckten Radialabstandsbereich umfasst,
insbesondere wobei der scheibenförmige Bereich und der ringförmige Bereich einstückig, insbesondere also einteilig, ausgeformt sind.

5. System nach einem der vorangegangenen Ansprüche,
**dadurch gekennzeichnet, dass**
das Adapterteil (4) in einer Vertiefung des Aufnahmeteils (9) angeordnet, insbesondere aufgenommen ist,
insbesondere wobei das Adapterteil (4) mittels der ersten Gewindestifte (10) vom Aufnahmeteil (9) beabstandet ist.

6. System nach einem der vorangegangenen Ansprüche,
**dadurch gekennzeichnet, dass**
das Adapterteil (4) aus dem Bolzenbereich (3) des Adapterteils (4) und einem an diesen Bolzenbereich (3) angrenzenden, scheibenförmiger Bereich des Adapterteils (4) einteilig gebildet ist, insbesondere also einstückig ausgebildet ist.

7. System nach einem der vorangegangenen Ansprüche,
**dadurch gekennzeichnet, dass**
am Außenumfang des Adapterteils (4), insbesondere an einem oder dem scheibenförmigen Bereich des Adapterteils (4), eine zylindrische Fläche ausgebildet ist, an welcher die ersten Gewindestifte (10) abgestützt sind.

8. System nach einem der vorangegangenen Ansprüche,
**dadurch gekennzeichnet, dass**
insbesondere auf gleichem Radialabstand zu den durch das Adapterteil (4) axial durchgehenden Gewindebohrungen, zwei in Umfangsrichtung voneinander beabstandete, insbesondere voneinander maximal beabstandete, Bohrungen (2) am Adapterteil (4) angeordnet sind, in welche an einem Hebelteil (8) befestigte oder ausgeformte Bolzen in die Bohrungen (2) einführbar sind, so dass mittels des Hebelteils (8) das Adapterteil (4), insbesondere mit hohem Drehmoment in das Werkstück (1) einschraubbar ist.

9. **System nach Anspruch 8,**
**dadurch gekennzeichnet, dass**
das Hebelteil (8) einen aufgerauten und/oder geriffelten Bereich aufweist, welcher von den Bolzen des Hebelteils (8) beabstandet ist.

10. System nach einem der vorangegangenen Ansprüche,
**dadurch gekennzeichnet, dass**
am Aufnahmeteil (9) axial durchgehende Bohrungen (2) ausgebildet sind, durch welche insbesondere mit einem Werkzeug, die in die axial gerichteten Gewindebohrungen des Adapterteils (4) eingeschraubten, zweiten Gewindestifte (5) betätigbar, insbesondere schraubbar sind,
insbesondere wobei die am Aufnahmeteil (9) axial durchgehenden Bohrungen (2) auf demselben Radialabstand angeordnet sind wie die in die axial gerichteten Gewindebohrungen des Adapterteils (4) eingeschraubten, zweiten Gewindestifte (5).

11. **System nach Anspruch 8 oder 9,**
**dadurch gekennzeichnet, dass**
das Hebelteil (8) an seiner dem Adapterteil (4) zugewandten Seite die beiden voneinander mit einem ersten Abstand beabstandeten, zum Adapterteil (4) hin hervorstehenden Bolzen aufweist, die in jeweilige axial gerichtete Bohrlöcher, insbesondere durch das Adapterteil (4) durchgehende Bohrlöcher, hineinragen.

12. **System nach Anspruch 8, 9 oder 11,**
**dadurch gekennzeichnet, dass**
das Hebelteil (8) an seiner vom Adapterteil (4) abgewandten Seite zwei weitere, voneinander mit einem zweiten Abstand beabstandete, axial hervorstehenden Bolzen aufweist,
wobei der erste Abstand größer ist als der zweite Abstand.

13. System nach einem der vorangegangenen Ansprüche,
**dadurch gekennzeichnet, dass**
eine axiale Richtung identisch ist mit einer Symmetrieachse des Aufnahmeteils (9) und/oder mit einer Symmetrieachse des Adapterteils (4),
insbesondere wobei die radiale Richtung und die Umfangsrichtung auf diese Symmetrieachse bezogen ist.

14. System nach einem der vorangegangenen Ansprüche,
**dadurch gekennzeichnet, dass**
das Aufnahmeteile und/oder das Adapterteil (4) eine zumindest diskrete Drehsymmetrie, insbesondere vor Einbringung von Bohrungen (2) eine kontinuierliche Drehsymmetrie, aufweist.

## Claims

1. A system for aligning a workpiece (1) relative to a machine part (13), in particular to a work centre,
wherein the system includes the workpiece (1), the machine part (13), a receiving part (9) and an adapter part (4),
wherein the adapter part (4) in relation to the receiving part (9) is held in a force-fit, in particular and/or is held centred, by means of first threaded pins (10) screwed into radially directed threaded bores in the receiving part (9),
wherein the machine part (13), in particular a mandrel region (12) of the machine part (13), is at least partially inserted into a cutout in the receiving part (9),
**characterised in that**
the adapter part (4) has a bolt region (3) which is at least partially introduced into a bore (2) in the workpiece (1), in particular a bore (2) arranged centrally in the workpiece (1),
with, in the adapter part (4), there being arranged threaded bores which pass axially through the adapter part (4), in particular through a or the disc-shaped region of the adapter part (4), and into which are screwed second threaded pins (5)
which are supported on the workpiece (1), in particular on a flat end face of the workpiece (1) which faces the adapter part (4).

2. A system according to claim 1,
**characterised in that**
the bore (2) in the workpiece (1) is embodied as a threaded bore and the bolt region (3) as a screw-thread region,
in particular with the adapter part (4) being screwed into the threaded bore by its bolt region (3).

3. A system according to one of the preceding claims,
**characterised in that**
the first threaded pins (10) screwed into radially directed threaded bores in the receiving part (9) are in particular regularly spaced apart from each other in the circumferential direction.

4. A system according to one of the preceding claims,
**characterised in that**
the radially directed threaded bores in the receiving part (9) are arranged in an annular region of the receiving part (9) which on its side which faces away from the workpiece (1) adjoins a disc-shaped region of the receiving part (9), this region comprising the radial clearance region covered by the annular region,
in particular with the disc-shaped region and the annular region being formed in one piece, in particular therefore in one part.

5. A system according to one of the preceding claims,
**characterised in that**
the adapter part (4) is arranged, in particular received, in an indentation in the receiving part (9),
in particular with the adapter part (4) being spaced apart from the receiving part (9) by means of the first threaded pins (10).

6. A system according to one of the preceding claims,
**characterised in that**
the adapter part (4) is formed in one part, in particular therefore is formed in one piece, from the bolt region (3) of the adapter part (4) and a disc-shaped region of the adapter part (4) adjoining this bolt region (3).

7. A system according to one of the preceding claims,
**characterised in that**
on the outer circumference of the adapter part (4), in particular on a or the disc-shaped region of the adapter part (4), there is formed a cylindrical face on which the first threaded pins (10) are supported.

8. A system according to one of the preceding claims,
**characterised in that**
in particular at the same radial clearance from the threaded bores which pass axially through the adapter part (4), two bores (2) spaced apart from each other in the circumferential direction, in particular maximally spaced apart from each other, are arranged on the adapter part (4), into which bores bolts fastened to or formed on a lever part (8) can be introduced into the bores (2), so that by means of the lever part (8) the adapter part (4) can be screwed into the workpiece (1), in particular with high torque.

9. A system according to claim 8,
**characterised in that**
the lever part (8) has a roughened and/or fluted region which is spaced apart from the bolts of the lever part (8).

10. A system according to one of the preceding claims,
**characterised in that**
bores (2) which pass through axially are formed on the receiving part (9), through which bores, in particular with a tool, the second threaded pins (5) screwed into the axially directed threaded bores in the adapter part (4) can be actuated, in particular can be screwed,
in particular with the bores (2) which pass through axially on the receiving part (9) being arranged at the same radial clearance as the second threaded pins (5) screwed into the axially directed threaded bores in the adapter part (4).

11. A system according to claim 8 or 9,
**characterised in that**
the lever part (8) has on its side facing the adapter part (4) the two bolts which are spaced apart from each other by a first distance and project towards the adapter part (4), which bolts protrude into respective axially directed drilled holes, in particular drilled holes which pass through the adapter part (4).

12. A system according to claim 8, 9 or 11,
**characterised in that**
the lever part (8) has on its side which faces away from the adapter part (4) two further axially projecting bolts which are spaced apart from each other by a second distance, with the first distance being greater than the second distance.

13. A system according to one of the preceding claims,
**characterised in that**
one axial direction is identical to an axis of symmetry of the receiving part (9) and/or to an axis of symmetry of the adapter part (4),
in particular with the radial direction and the circumferential direction being related to this axis of symmetry.

14. A system according to one of the preceding claims,
**characterised in that**
the receiving parts and/or the adapter part (4) has an at least discrete rotational symmetry, in particular prior to forming bores (2) a continuous rotational symmetry.

## Revendications

1. Système permettant d'aligner une pièce à usiner (1) par rapport à une pièce de machine (13), en particulier par rapport à une machine d'usinage,
le système comprenant la pièce à usiner (1), la pièce de machine (13), une pièce de réception (9) et une pièce formant adaptateur (4),
la pièce formant adaptateur (4) étant retenue, et/ou en particulier étant centrée, par complémentarité de force par rapport à la pièce de réception (9) au moyen de premières goupilles filetées (10) vissées dans des alésages filetés orientés radialement de la pièce de réception (9),
la pièce de machine (13), en particulier une région de mandrin (12) de la pièce de machine (13), étant au moins partiellement insérée dans un évidement de la pièce de réception (9),
**caractérisé en ce que**
la pièce formant adaptateur (4) présente une région d'axe (3) qui est introduite au moins partiellement dans un alésage (2) de la pièce à usiner (1), en particulier un alésage (2) agencé au centre de la pièce à usiner (1),
des alésages filetés, traversant axialement la pièce formant adaptateur (4), en particulier une ou la région en forme de disque de la pièce formant adaptateur (4), et dans lesquels sont vissées des secondes goupilles filetées (5) qui s'appuient sur la pièce à usiner (1), en particulier au niveau d'une surface frontale plane de la pièce à usiner (1) tournée vers la pièce formant adaptateur (4), étant agencés dans la pièce formant adaptateur (4).

2. Système selon la revendication 1,
**caractérisé en ce que**
l'alésage (2) de la pièce à usiner (1) est réalisé sous la forme d'un alésage fileté et la région d'axe (3) est réalisée sous la forme d'une région filetée,
la région d'axe (3) de la pièce formant adaptateur (4) étant en particulier vissée dans l'alésage fileté.

3. Système selon l'une quelconque des revendications précédentes,
**caractérisé en ce que**
les premières goupilles filetées (10) vissées dans des alésages filetés orientés radialement de la pièce de réception (9) sont espacées les unes des autres dans la direction circonférentielle, en particulier de manière régulière.

4. Système selon l'une quelconque des revendications précédentes,
**caractérisé en ce que**
les alésages filetés orientés radialement de la pièce de réception (9) sont agencés dans une région annulaire de la pièce de réception (9) qui, sur son côté opposé à la pièce à usiner (1), est adjacente à une région en forme de disque de la pièce de réception (9), ladite région comprenant la région d'espacement radial recouverte par la région annulaire,
la région en forme de disque et la région annulaire étant en particulier formées d'un seul tenant, en particulier d'une seule pièce.

5. Système selon l'une quelconque des revendications précédentes,
**caractérisé en ce que**
la pièce formant adaptateur (4) est agencée, en particulier est accueillie, dans un renfoncement de la pièce de réception (9),
la pièce formant adaptateur (4) étant en particulier espacée par rapport à la pièce de réception (9) au moyen des premières goupilles filetées (10).

6. Système selon l'une quelconque des revendications précédentes,
**caractérisé en ce que**
la pièce formant adaptateur (4) est formée d'une seule pièce, en particulier est réalisée d'un seul tenant, à partir de la région d'axe (3) de la pièce formant adaptateur (4) et d'une région en forme de disque, adjacente à ladite région d'axe (3), de la pièce formant adaptateur (4).

7. Système selon l'une quelconque des revendications précédentes,
**caractérisé en ce que**
une surface cylindrique sur laquelle s'appuient les premières goupilles filetées (10) est réalisée au niveau de la périphérie extérieure de la pièce formant adaptateur (4), en particulier au niveau d'une ou de la région en forme de disque de la pièce formant adaptateur (4).

8. Système selon l'une quelconque des revendications précédentes,
**caractérisé en ce que**
deux alésages (2), espacés l'un de l'autre, en particulier situés à une distance maximale l'un de l'autre, dans la direction périphérique et dans les alésages (2) desquels des doigts fixés ou formés au niveau d'une pièce formant levier (8) peuvent être introduits de sorte que la pièce formant adaptateur (4) peut être vissée dans la pièce à usiner (1) au moyen de la pièce formant levier (8), en particulier avec un couple de rotation élevé, sont agencés sur la pièce d'adaptateur (4), en particulier à la même distance radiale par rapport aux alésages filetés traversant axialement la pièce formant adaptateur (4).

9. Système selon la revendication 8,
**caractérisé en ce que**
la pièce formant levier (8) présente une région rugueuse et/ou cannelée qui est espacée par rapport aux doigts de la pièce formant levier (8).

10. Système selon l'une quelconque des revendications précédentes,
**caractérisé en ce que**
des alésages (2) axialement traversants au niveau de la pièce de réception (9) sont réalisés, à travers lesquels les secondes goupilles filetées (5) vissées dans les alésages filetés orientés axialement de la pièce formant adaptateur (4) peuvent être actionnées, en particulier peuvent être vissées, en particulier avec un outil,
les alésages (2) axialement traversants au niveau de la pièce de réception (9) étant en particulier agencés à la même distance radiale que les secondes goupilles filetées (5) vissées dans les alésages filetés orientés axialement de la pièce formant adaptateur (4).

11. Système selon la revendication 8 ou 9,
**caractérisé en ce que**
la pièce formant levier (8) présente, sur son côté tourné vers la pièce formant adaptateur (4), les deux doigts, espacés l'un de l'autre d'une première distance et faisant saillie vers la pièce formant adaptateur (4), qui pénètrent dans des trous forés respectivement orientés de manière axiale, en particulier à travers des trous forés traversant la pièce formant adaptateur (4).

12. Système selon la revendication 8, 9 ou 11,
**caractérisé en ce que**
la pièce formant levier (8) présente, sur son côté opposé à la pièce formant adaptateur (4), deux doigts supplémentaires faisant saillie axialement et espacés l'un de l'autre d'une seconde distance,
la première distance étant supérieure à la seconde distance.

13. Système selon l'une quelconque des revendications précédentes,
**caractérisé en ce que**
la direction axiale est identique à un axe de symétrie de la pièce de réception (9) et/ou à un axe de symétrie de la pièce formant adaptateur (4),
la direction radiale et la direction circonférentielle se rapportant en particulier audit axe de symétrie.

14. Système selon l'une quelconque des revendications précédentes,
**caractérisé en ce que**
la pièce de réception et/ou la pièce formant adaptateur (4) présente une symétrie de rotation au moins discrète, en particulier une symétrie de rotation continue avant la mise en place des alésages (2).
